# EUROPEAN PATENT SPECIFICATION

(11) **EP 1 099 533 B1**
(45) Date of publication and mention of the grant of the patent: **21.04.2004**
(21) Application number: 99308953.1
(22) Date of filing: 10.11.1999
(51) Int. Cl.: B29C 65/20, B29C 53/36, B60R 13/02

(54) **An apparatus for heat bonding plastic strips and clips**
Vorrichtung zum Heissverbinden von Kunststoffbändern und -clips
Appareil pour la liaison à chaud de bandes et clips en matière thermoplastique

(43) Date of publication of application: 16.05.2001
(73) Proprietor: Munekata Co., Ltd., Fukushima-shi (JP)
(72) Inventor: Tashiro, Hitoshi, Toyota-shi,, Aichi-ken 471-8571 (JP); Shigihara, Takao, Fukushima-shi, Fukushima-ken, 960-8506 (JP); Ito, Takeshi, Fukushima-shi, Fukushima-ken, 960-8506 (JP); Sawada, Kazuto, Toyota-shi, Aichi-ken 471-0064 (JP)
(74) Representative: King, James Bertram

(56) References cited:
- EP-A- 0 564 189
- DE-A- 2 248 678
- DE-U- 29 519 400
- FR-A- 2 105 312
- US-A- 3 033 728
- US-A- 3 684 582
- US-A- 3 692 613
- PATENT ABSTRACTS OF JAPAN vol. 1999, no. 12, 29 October 1999 (1999-10-29) & JP 11 198194 A (SEKISUI CHEM CO LTD), 27 July 1999 (1999-07-27)
- DATABASE WPI Section Ch, Week 199926 Derwent Publications Ltd., London, GB; Class A35, AN 1999-305561 XP002144000 & JP 02 895475 B (TOHOKU MUNEKATA CO LTD), 24 May 1999 (1999-05-24) -& EP 0 959 526 A 24 November 1999 (1999-11-24)
- PATENT ABSTRACTS OF JAPAN vol. 2000, no. 02, 29 February 2000 (2000-02-29) & JP 11 300836 A (TOHOKU MUNEKATA CO LTD), 2 November 1999 (1999-11-02)

## Description

This invention relates to a method and apparatus for heat bonding plastic strips to fixing clips and is particularly concerned with strips for application as protective strips to motor vehicles.

For protecting the external panels of automobile bodies and doors, protective strips or rubbing strips sometimes known as P-strips or P-laces (hereinafter to be called "strakes") made from a band of synthetic plastics material are added to the outside panels of bodies and doors. These strakes include an integral fixing clip forming a seat which is bonded to the strip to form a fastening means.

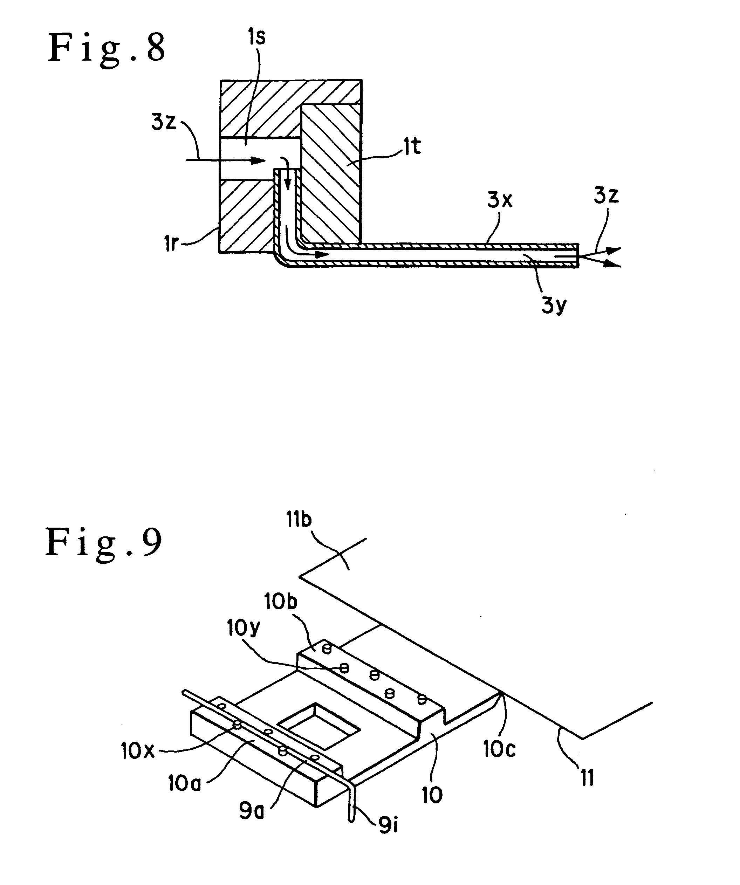

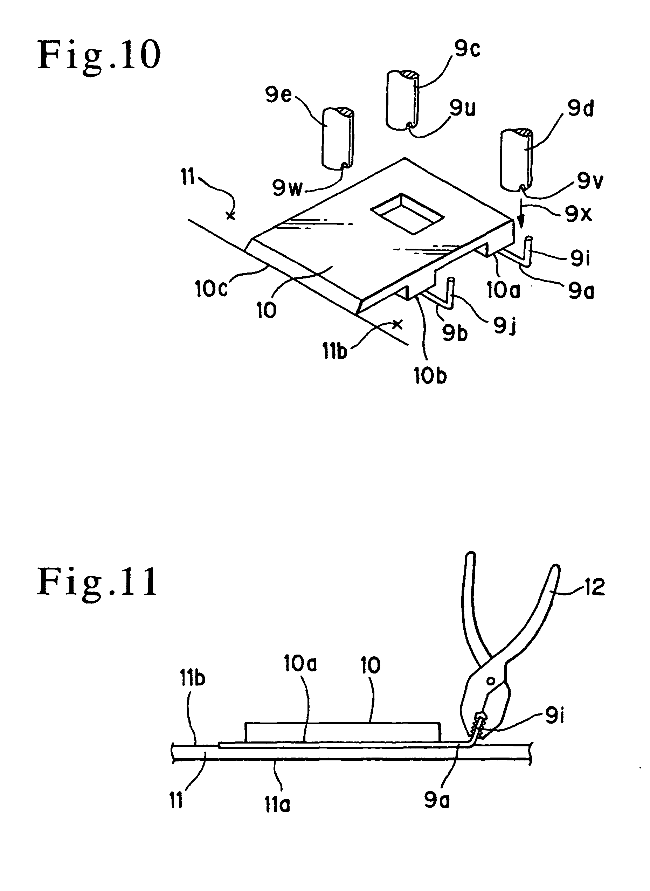

Figs. 9 to 11 show a prior-art example of mounting strakes. As shown in Figs. 9 to 11, a pair of wire heating elements 9a and 9b are provided for connecting clip seats 10 and the strake 11. The bent portion 9i is formed on the one end of heating element 9a and the bent portion 9j is formed on the one end of heating element 9b.

If the terminal 9c is moved in the direction of arrow 9x then groove 9u of terminal 9c connects to one side of heating element 9a, and similarly the groove 9v of terminal 9d connects to the other end of heating element 9b. Furthermore, the groove 9w of terminal 9e connects to one end of heating element 9b, and the groove (corresponding to the groove 9v) of a further terminal (corresponding to the terminal 9d) and which is not shown in the figure is connected to the other end of heating element 9b.

The clip seat 10 has a pair of protruding faces 10a and 10b. A plurality of pins 10x are formed on the face 10a and a plurality of pins 10y are formed on the face 10b. The strake 11 is in the form of a band with a surface 11 a and a rear face 11 b. The clip seat 10 and the strake 11 are connected by. hinge coupling portion 10c and are formed by an integral moulding of synthetic plastics.

The heating element 9a is arranged so that it may be trapped by pins 10x of face 10a, and the heating element 9b is arranged in such that it may be trapped by pins 10y of face 10b. Fig. 9 shows the state before the heating element 10b is positioned.

If an electric current is passed through the heating elements 9a and 9b via the terminals (9c,9d,9e) with the clip seat 10 being hinged at 10c and the pins 10x and 10y in contact with the rear face 11 b of strake 11, then the pins 10x and 10y and the rear face 11 b of strake 11 are bonded by fusion due to the heat produced by heating elements 9a and 9b.

Thereafter, the heating elements 9a and 9b are withdrawn using a pair of pliers 12.

The time needed for each operation is:
(1) 5 seconds per piece for the heating elements 9a and 9b,
(2) 2 seconds per piece for the bending of clip seat 10,
(3) 5 seconds per sheet for setting work pieces (clip seat 10 and strake 11) in the machine,
(4) 2 seconds for work piece locking,
   1 second in the descent of terminals and clip seat pressure application,
   10 seconds for voltage impression (heat generation and fusion),
   16 seconds in the machine cycle,
   1 second in the ascent of terminals and clip seat pressure application and
   2 seconds in the work piece lock release in case of the machine operation,
(5) 5 seconds per sheet in taking out the work piece and
(6) 5 seconds per sheet in pulling out the heating elements 9a and 9b using a pair of pliers.

Furthermore necessary manual time becomes as follows:

**[Table 1]**

| | Front door strake | Rear door strake | Fender strake |
|---|---|---|---|
| Number of clips | At 6 places | At 4 places | At 2 places |
| Number of heating elements | 12 pieces | 8 pieces | 4 pieces |
| Total time | 142 seconds | 98 seconds | 34 seconds |

However, in the above described conventional example, the bending process between the clip seat 10 and the strake 11 is complex and the efficiency of bonding operation proved to be inferior.

An object of this invention is to provide an apparatus and a method which can operate automatically to produce the connections or bonding between the clip seat and the strake.

In accordance with this invention there is provided an apparatus for bonding an attachment clip seat to a protective strake wherein the clip is integrally connected with an edge of the strake through a hinge, the clip seat having protuberances which may be brought into contact with a surface of the strake by bending about the hinge, wire heating elements being located between the protuberances and the strake whereby such parts of the clip seat may be melted and bonded to the strake; the apparatus comprising a heat producing member having a first electrical connection member connected to one end of said heat producing member with a means for moving the said first electrical connection member and heat producing member equipped will said wire heating elements at said other end into contact with a surface of the strake, a second electrical connection member being adapted to contact and connect with the other end of said heat producing member element, a bending jig for turning the clip about the hinge and overlapping the said clip with the rear face of said strake and overlying the heating element, a pressure member for retaining the said overlapped clip seat in position, a power source for applying electric current between the said first electrical connection member and the said second electrical connection member to heat the wire heating elements in order to fuse parts of the clip with the surface of the strake with means operative to thereafter withdraw the wire heating elements.

This invention also provides a method for bonding an attachment clip seat to a protective strake wherein the clip is integrally connected with an edge of the strake through a hinge, the clip seat having protuberances which may be brought into contact with a surface of the strake by bending about the hinge, wire heating elements being located between the protuberances and the strake whereby such parts of the clip seat may be melted and bonded to the strake, in which method a heat producing member is moved into contact with the surface of the strake, a bending jig thereafter turning the clip about the hinge and overlaping the said clip with the rear face of said strake to overlie the wire heating elements, pressure being applied by a member to retain the said overlapped clip seat in position, electric current being applied between the ends of the heat producing member to heat the wire heating elements (3a, 3b) to fuse parts of the clip with the surface of the strake, the heating member then being withdrawn laterally from the junction between the strake and clip.

In order to improve the efficiency of bonding a strake and fastening clip seat for use on an automobile an automatic bonding machine is provided and in accordance with this invention which comprises wire heating elements and with a first electrical connection member connected to one end of said heating elements and a means for moving the said first connection member. A second electrical connection member is arranged to be moved to connect with the other end of the heating elements. A bending jig overlaps the clip seat with the strake and onto the wire heating elements at the point where the clip seat and the strake are to be interconnected and on the rear face of the strake. A pressure member is applied to the overlapped clip seat and electrical power applied between the first connection member and the said second connection member. The wire heating element can be formed as a tube through which cooling gas is passed to speed-up the operation.

This invention is further described and illustrated by reference to embodiments shown by way of examples and illustrated by the accompanying drawings, wherein:
- Fig. 1: shows a perspective view of the main components of an apparatus according to this invention,
- Fig. 2: shows a side view of the heating element connection member,
- Fig. 3: shows diagrammatically in side view the folding operation of the apparatus,
- Fig. 4: shows diagrammatically in end view the pressing operation of the apparatus,
- Fig. 5: shows diagrammatically movement of the wire heating elements,
- Fig. 6: shows an alternative clip arrangement before folding,
- Fig. 7: shows the clip of Fig. 6 after folding,
- Fig. 8: shows a cross section of a second embodiment of wire heating elements.
- Fig. 9: shows a prior-art embodiment of clip and wire heating elements,
- Fig. 10: shows diagrammatically the operation of the embodiment of Fig. 9, and
- Fig. 11: shows removal of the wire heating elements of the embodiment of Figs. 9 and 10.

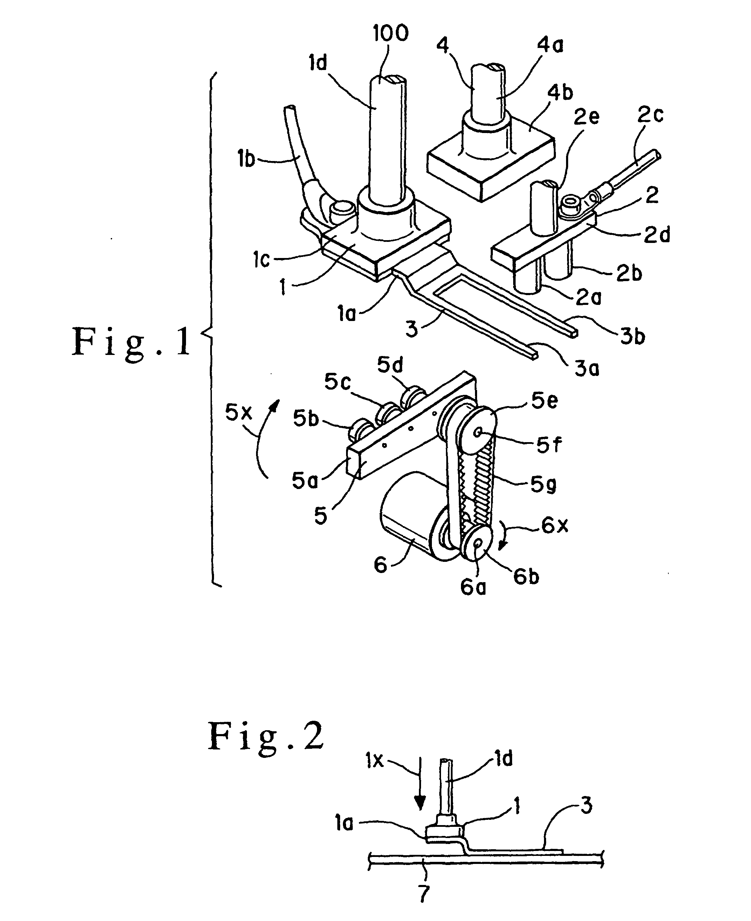

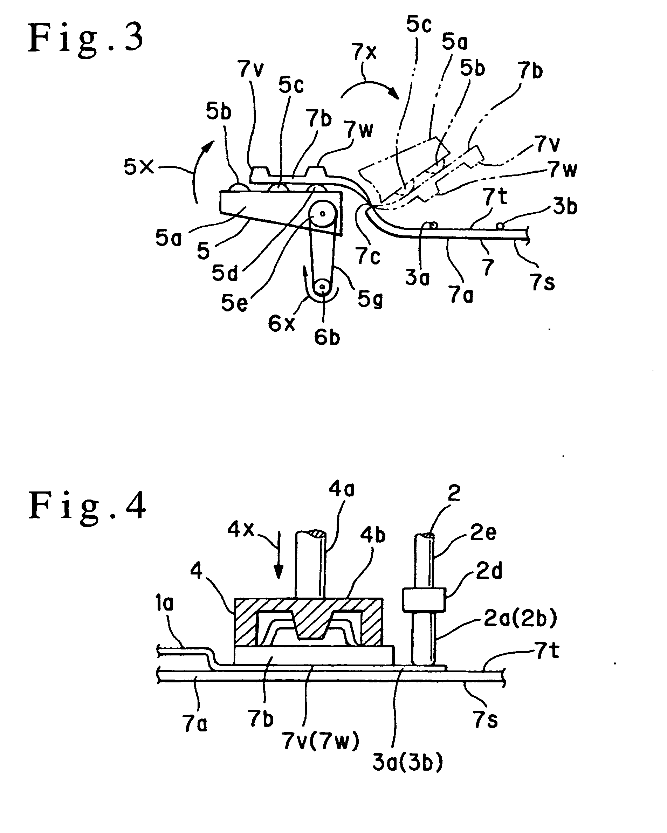

Embodiments of this invention are described in conjunction with the drawings in which Figure 1 shows the main components of an automatic apparatus according to this invention, Figure 2 shows a part of the apparatus and Figures 3 to 5 show the operation of the apparatus.

Referring to Figs. 1 to 5 the main components of the apparatus 100 are a first electrical heater element connection member 1, a second electrical heater element connection member 2, a heat producing member 3, a holding member 4, a bending jig 5 and a drive motor 6.

The.first connection member 1 is equipped with terminal 1a, lead 1b, holding portion 1c and rod 1d. The holding portion 1 c is fixed to the lower end of rod 1d, and the terminal 1a is fixed to the lower face of holding portion 1c. The lead 1 b is connected to the end of terminal 1a. The rod 1 d is movable by an actuator not shown in the drawing.

The second connection member 2 is equipped with terminals 2a and 2b, lead 2c, support device 2d and rod 2e. The terminal 2a and the terminal 2d form a pair and are fixed to the lower face of support device 2d. The support device 2d is fixed to the lower end of rod 2e. The rod 2e can be moved in the vertical direction (the direction of arrow 1x and in the reverse direction against the arrow 1x) by a hydraulic cylinder not shown in the drawing.

The heat producing member 3 is equipped with a pair of wire shape heating elements 3a and 3b. The wire heating elements 3a and 3b are respectively formed integrally with the said terminal 1a. The material of terminal 1a and wire heating elements 3a and 3b is SUS spring steel, and has the same degree of electric resistance as nickel chrome wire. The terminal 1a has a large cross sectional area in the electric current path, so the resistance is small and thus does not generate heat. The wire heating elements 3a and 3b have a small cross sectional area in the electric current path and moreover the electric current path is long, so they become heated in the same way as nickel chrome wire.

The retaining member 4 has rod 4a and pressure plate 4b. The pressure plate 4b is fixed to the lower end of rod 4a. The rod 4a can be moved in a vertical direction (arrow 4x or in reverse) by the hydraulic cylinder not shown in the drawing (see Fig. 4).

The bending jig 5 has a support plate 5a, rollers 5b, 5c and 5d and drive gear 5e. The rollers 5b, 5c and 5d are mounted on the support plate 5a in such a way that they can be rotated. The gear 5e is locked on the support plate 5a. When the gear is rotated by the motor 6 described later, the support plate 5a is turned in the direction of the arrow 5x or in a reverse direction with the centre shaft 5f of gear 5e as the centre of rotation.

The motor 6 is a servomotor, and the angle of rotation of motor 6 can be controlled. The gear 6b is locked to the rotary shaft 6a of motor 6. The toothed belt drive 5g is arranged such that it may transmit the rotation of gear 6b to the gear 5e. If the gear 6b is turned in the direction 6x by the rotation of motor 6, the support plate 5a is turned in the direction 5x. If the gear 6b is turned in the reverse direction then the support plate 5a is turned in the reverse direction.

The strake 7 is made of synthetic plastic, and has the strake part 7a and the clip seat 7b. The hinge coupling portion 7c couples the strake 7a and the clip seat 7b.

The strake 7a is positioned on the automatic bonding machine with the surface 7s opposite the rear face 7t, and the rod 1d moves in the direction of arrow 1x as shown in Fig. 2 and Fig. 3. The heat producing member 3 is positioned on the rear face 7t.

When the motor 6 rotates the support plate 5a in the direction of arrow 5x then the clip seat 7b of the member 7 is pressed by the rollers 5b, 5c and 5d mounted on the support plate 5a and is turned in the direction of arrow 7x as shown in Fig. 3, the protruding face 7w of clip seat 7b contacts the wire heating element 3a and the protruding face 7v of clip seat 7b contacts the wire heating element 3b.

The pressure member 4 and the second connection member 2 descends as shown in Fig 4. The descended pressure member 4 presses down the clip 7b, and the terminal 2a is connected to the tip of wire heating element 3a and the terminal 2b is connected to the tip of wire heating element 3b of the descended second connection member 2.

If the voltage is impressed between the lead 1 b and the lead 2c thereafter, electric current flows through the wire heating elements 3a and 3b, and the protruding faces 7v and 7w of clip seat 7b can be bonded to the rear face 7t of strake 7a by the heat produced by wire heating elements 3a and 3b.

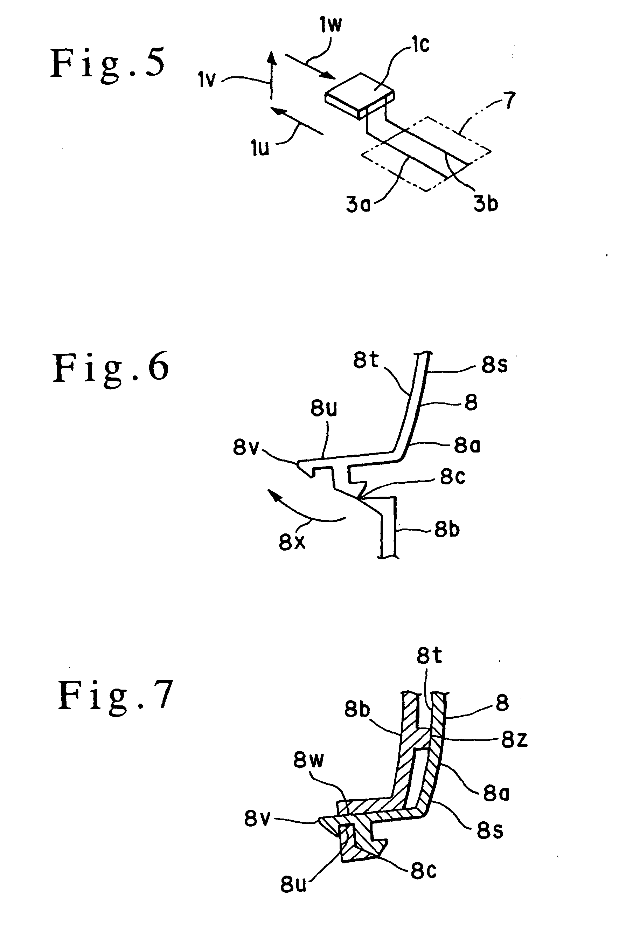

When the holding portion 1c of first connection member 1 moves in the direction of arrow 1u as shown in Fig. 5, the wire heating elements 3a and 3b separate from the deposited portion of the member 7. Thereafter, the holding portion 1c moves sequentially in the direction of arrows 1v and 1w whereby the first connection member 1 moves to a stand-by position.

If the pressure member 4 and the bending jig 5 are not used then the member 8 of the strake is used in place of the member 7 and as shown in Fig. 6 and Fig. 7. The strake member 8 is made of flexible synthetio plastics, and has a strake 8a and clip seat 8b. The hinge coupling portion 8c connects the strake 8a and the clip seat 8b. A protruding portion 8u is provided at the rear face 8t of strake 8a. A claw 8v is provided on the tip of the protruding portion 8u. The surface 8s is the front surface of strip 8a. A protruding part 8z and an aperture 8w are formed on the clip seat 8b.

If the clip seat 8b is turned in the direction of arrow 8x then the protruding part 8z of dip seat 8b connects with the rear face 8t of strip 8a and the protruding portion 8a is inserted into the hole 8w of clip seat 8b and the tip 8v of portion 8u prevents the part from pulling out.

From the above description, the time needed for operating the automatic bonding machine 100 becomes as follows:
(1) 5 seconds per sheet for setting work piece (the member 7) in the machine
(2) for the machine operation,
   (a) 2 seconds for fixing the work piece,
   (b) 1 second for the descent of wire heating elements 3a and 3b,
   (c) 1 second for bending the hinge coupling portion 7c,
   (d) 1 second for descent of the second connection member 2 and the pressure member 4,
   (e) 10 seconds for the voltage application, heat generation and bonding, 20 seconds for the machine cycle,
   f) 1 second for the ascent of the second connection member and the pressure member 4,
   (g) 2 seconds for the retraction of wire heating elements 3a and 3b,
   (h) 2 seconds for the work piece lock release, and
(3) 5 seconds per sheet for removing the work piece.
The necessary manual work takes up 10 seconds regardless of the kinds of strake.

For this reason, the time of 132 seconds maximum can be decreased by carrying out the method of this invention by automation in comparison with the previously mentioned prior art.

Fig. 8 shows an example where the wire heating elements 3a and 3b are shaped as ducts and, as shown, the heating-element tube 3x is secured to the main body 1 r by a pipe clamp 1t. The aperture 1 s of main body 1r is interconnected with the duct 3y of tube 3x. The main body 1 r acts as the conductive terminal in a similar way to the terminal 1a (see Fig. 1), and a lead not shown in the figure but corresponding to the lead 1 b is connected therewith. The arrow 3z shows the flow of cooling compressed air for cooling purposes after the bonding of the said clip seat 7b and the strake 7a.

In the automatic bonding machine 100 according to the first embodiment, the first connection member 1 connected to one end of the wire heating elements 3a and 3b is moved against the rear face 7t of strake 7a, the clip seat 7b of the member 7 for the strake is folded down on the rear face 7t of strake 7a over the wire heating elements 3a and 3b and using the bending jig 5. Electric current then flows to the wire heating elements 3a and 3b from a power source connected between the said first connection portion 1 and the said second connection portion 2 with the second connection portion 2 being connected to the other end of the heating elements 3a and 3b, The strake 7a and the clip seat 7b are arranged to trap the wire heating elements 3a and 3b and are connected by heat from the elements 3a and 3b.

After the connection between the said clip seat 7b and strake 7a has been effected the cooling of wire heating element 3x can be speeded up to about 1 second by passing a cooling gas through duct 3y of wire heating element 3x and forcibly cooling it down. The time required for cooling in case of natural heat dissipation after the said bonding is about 6 seconds. The time needed for the bonding is about 2.5 seconds, and the time required for removing the tube heating element 3x after the said bonding is about 1.5 seconds. For this reason, the time needed until removal of wire heating element 3x after the impression of voltage is about 5 seconds. This can be decreased to half by using the cooled heating element 3x.

Because the heat generated during the said bonding can be dissipated by the forced air cooling the heat deformation on the face of the deposited portion can be decreased. The rigidity of wire heating element 3x can be enhanced by adopting the tubular heater design, and can prevent the deformation and bending of the heating element that can be produced by the solid round wire heating elements 3a and 3b.

In the automatic bonding machine of the first embodiment the bonding between the strake for an automobile and the clip seat can be effected automatically and with high efficiency. For this reason, the time necessary for the bonding between the strake and the clip seat can be noticeably decreased, and the assembly efficiency improved.

According to the second embodiment, the cooling of the pipe heating element and the deposited portion can be increased by passing cooling gas through the inside of the heating element after the bonding between the clip seat and strake. The efficiency is thus additionally improved.

## Claims

1. An apparatus for bonding an attachment dip seat (7b) to a protective strake (7) wherein the clip is integrally connected with an edge of the strake through a hinge (7c), the clip seat (7b) having protuberances (7v, 7w) which may be brought into contact with a surface (7t) of the strake (7) by bending about the hinge (7c), wire heating elements (3a, 3b) being located between the protuberances (7v, 7w) and the strake (7) whereby such parts of the clip seat (7b) may be melted and bonded to the strake (7); the apparatus comprising a heat producing member (3) having a first electrical connection member (1) connected to one end of said heat producing member (3) with a means (1d) for moving the said first electrical connection member (1) and heat producing member (3) into contact with a surface (7t) of the strake (7), a second electrical connection member (2) being adapted to contact and connect with the other end of said heat producing member (3) equipped with said wire heating elements (3a, 3b) at said other end, a bending jig (5) for turning the clip about the hinge (7c) and overlapping the said clip with the rear face (7t) of said strake and overlying the wire heating elements (3a, 3b), a pressure member (4b) for retaining the said overlapped clip seat in position, power source for applying electric current between the said first electrical connection nember (1) and the said second electrical connection member (2) to heat the wire heating elements (3a, 3b) in order to fuse parts of the clip with the surface of the strake with means operative to thereafter withdraw the wire heating elements (3a, 3b).

2. An apparatus as claimed in Claim 1, **characterised in that** the said wire heating elements (3x) are tubular and that a cooling gas (3z) is passed through the heating element bore (3y) of said heating elements after the application of electric current.

3. A method for bonding an attachment dip seat (7b) to a protective strake (7) wherein the clip is integrally connected with an edge of the strake through a hinge (7c), the clip seat (7b) having protuberances (7v, 7w) which may be brought into contact with a surface (7t) of the strake (7) by bending about the hinge (7c), wire heating elements (3a, 3b) being located between the protuberances (7v, 7w) and the strake (7) whereby such parts of the clip seat (7b) may be melted and bonded to the strake (7), in which method a heat producing member (3) is moved into contact with the surface (7t) of the strake (7), a bending jig (5) thereafter turning the clip about the hinge (7c) and overlaping the said clip with the rear face (7t) of said strake to overlie the wire heating elements (3a, 3b), pressure being applied by a member (4b) to retain the said overlapped clip seat (7b) in position, electric current being applied between the ends of the heat producing member (3) to heat the wire heating elements (3a, 3b) to fuse parts of the clip with the surface of the strake, the heating member (3) then being withdrawn laterally from the junction between the strake (7) and clip.

4. A method in accordance with claim 3, **characterised in that** the wire heating elements (3x) include a passageway for the flow of cooling gas (3z) initiated after application of electrical current.

## Patentansprüche

1. Vorrichtung zum Heißverbinden eines Sitzes (7b) eines Befestigungsclips mit einer Schutzleiste (7), wobei der Clip über ein Gelenkteil (7c) integral mit einem Rand der Leiste verbunden ist, der Clipsitz (7b) Ausläufer (7v, 7w) aufweist, die sich durch Biegen um das Gelenkteil (7c) herum mit einer Oberfläche (7t) der Leiste (7) in Kontakt bringen lassen, wobei Drahtheizelemente (3a, 3b) zwischen den Ausläufern (7v, 7w) und der Leiste (7) angeordnet sind, wodurch diese Teile des Clipsitzes (7b) geschmolzen und mit der Leiste (7) heißverbunden werden können; wobei die Vorrichtung folgendes umfasst:
ein wärmeerzeugendes Teil (3) mit einem ersten elektrischen Anschlussteil (1), das mit einem Ende des wärmeerzeugenden Teils (3) verbunden ist, mit einem Mittel (1d) zum Bewegen des ersten elektrischen Anschlussteils
(1) und des wärmeerzeugenden Teils (3), um diese mit einer Oberfläche (7t) der Leiste (7) in Kontakt zu bringen, wobei ein zweites elektrisches Anschlussteil
(2) dazu vorgesehen ist, das andere Ende des wärmeerzeugenden Teils (3), welches an diesem anderen Ende mit den Drahtheizelementen (3a, 3b) versehen ist, zu kontaktieren und eine Verbindung zu diesem herzustellen, eine Biegevorrichtung (5) zum Drehen des Clips um das Gelenkteil (7c) herum und zum Überlappen des Clips mit der hinteren Fläche (7t) der Leiste, wobei er dann über den Drahtheizelementen (3a, 3b) liegt, ein Druckelement (4b) zum Halten des überlappten Clipsitzes in seiner Stellung, eine Stromquelle zum Anlegen von elektrischem Strom zwischen dem ersten elektrischen Anschlussteil (1) und dem zweiten elektrischen Anschlussteil (2) zum Aufheizen der Drahtheizelemente (3a, 3b), um Teile des Clips durch Schmelzen mit der Oberfläche der Leiste zu verbinden, mit Mitteln, die zum anschließenden Entfernen der Drahtheizelemente (3a, 3b) betrieben werden können.

2. Vorrichtung nach Anspruch 1, **dadurch gekennzeichnet, dass** die genannten Drahtheizelemente (3x) rohrförmig sind und dass nach dem Anlegen von elektrischem Strom ein Kühlgas (3z) durch die Heizelementbohrung (3y) der genannten Heizelemente geleitet wird.

3. Verfahren zum Heißverbinden eines Sitzes (7b) eines Befestigungsclips mit einer Schutzleiste (7), wobei der Clip über ein Gelenkteil (7c) integral mit einem Rand der Leiste verbunden ist, der Clipsitz (7b) Ausläufer (7v, 7w) aufweist, die sich durch Biegen um das Gelenkteil (7c) herum mit einer Oberfläche (7t) der Leiste (7) in Kontakt bringen lassen, wobei Drahtheizelemente (3a, 3b) zwischen den Ausläufern (7v, 7w) und der Leiste (7) angeordnet sind, wodurch diese Teile des Clipsitzes (7b) geschmolzen und mit der Leiste (7) heißverbunden werden können; wobei bei dem Verfahren ein wärmeerzeugendes Teil (3) zum Kontakt mit der Oberfläche (7t) der Leiste (7) bewegt wird, anschließend eine Biegevorrichtung (5) den Clip um das Gelenkteil (7c) herum dreht und den Clip mit der hinteren Fläche (7t) der Leiste überlappen lässt, damit er über den Drahtheizelementen (3a, 3b) liegt, Druck über ein Element (4b) angelegt wird, um den genannten überlappten Clipsitz (7b) in seiner Stellung zu halten, wobei elektrischer Strom zwischen den Enden des wärmeerzeugenden Teils (3) angelegt wird, um die Drahtheizelemente (3a, 3b) aufzuheizen, um Teile des Clips durch Schmelzen mit der Oberfläche der Leiste zu verbinden, wobei das Heizelement (3) anschließend seitlich aus dem Übergang zwischen der Leiste (7) und dem Clip entfernt wird.

4. Verfahren nach Anspruch 3, **dadurch gekennzeichnet, dass** die Drahtheizelemente (3x) einen Durchgang für den nach dem Anlegen von elektrischem Strom ausgelösten Fluss von Kühlgas (3z) aufweisen.

## Revendications

1. Dispositif pour coller un siège d'agrafe de fixation (7b) à une bande protectrice (7), dans lequel l'agrafe est reliée intégralement à un bord de la bande par une charnière (7c), le siège d'agrafe (7b) ayant des protubérances (7v, 7w) qui peuvent être mises en contact avec une surface (7t) de la bande (7) par flexion autour de la charnière (7c), des éléments chauffants à fil métallique (3a, 3b) étant situés entre les protubérances (7v, 7w) et la bande (7), dans lequel ces parties du siège d'agrafe (7b) peuvent être fondues et collées à la bande (7) ; le dispositif comprenant un élément producteur de chaleur (3) ayant un premier élément de connexion électrique relié à une extrémité dudit élément producteur de chaleur (3) avec un moyen (1d) prévu pour amener ledit premier élément de connexion électrique (1) et l'élément producteur de chaleur (3) en contact avec une surface (7t) de la bande (7), un second élément de connexion électrique (2) étant adapté pour entrer en contact et être connecté avec l'autre extrémité dudit élément producteur de chaleur (3) équipé desdits éléments chauffants à fil métallique (3a, 3b) à ladite autre extrémité, un appareil de flexion (5) pour tourner l'agrafe autour de la charnière (7c) et chevaucher ladite agrafe avec la face arrière (7t) de ladite bande et recouvrir les éléments chauffants à fil métallique (3a, 3b), un élément de pression (4b) pour retenir ledit siège d'agrafe chevauché en position, une source de tension pour appliquer un courant électrique entre ledit premier élément de connexion électrique (1) et ledit second élément de connexion électrique (2) pour chauffer les éléments chauffants à fil métallique (3a, 3b) afin de fusionner des parties de l'agrafe avec la surface de la bande, avec un moyen ayant pour effet de retirer ensuite les éléments chauffants à fil métallique (3a, 3b).

2. Dispositif selon la revendication 1, **caractérisé en ce que** lesdits éléments chauffants à fil métallique (3x) sont tubulaires et **en ce qu'**un gaz réfrigérant (3z) est introduit à l'intérieur (3y) desdits éléments chauffants après l'application du courant électrique.

3. Procédé pour coller un siège d'agrafe de fixation (7b) à une bande protectrice (7) dans lequel l'agrafe est reliée intégralement avec un bord de la bande par l'intermédiaire d'une charnière (7c), le siège d'agrafe (7b) ayant des protubérances (7v, 7w) qui peuvent être amenées en contact avec une surface (7t) de la bande (7) par flexion autour de la charnière (7c), les éléments chauffants à fil métallique (3a, 3b) étant situés entre les protubérances (7v, 7w) et la bande (7), grâce à quoi ces parties du siège d'agrafe (7b) peuvent être fondues et collées à la bande (7), dans ledit procédé, un élément producteur de chaleur (3) étant amené en contact avec la surface (7t) de la bande (7), un appareil de flexion (5) tournant ensuite l'agrafe autour de la charnière (7c) et chevauchant ladite agrafe avec la face arrière (7t) de ladite bande pour recouvrir les éléments chauffants à fil métallique (3a, 3b), une pression étant appliquée par un élément (4b) pour retenir en position ledit siège d'agrafe chevauché (7b), un courant électrique étant appliqué entre les extrémités de l'élément producteur de chaleur (3) pour chauffer les éléments chauffants à fil métallique (3a, 3b) afin de fusionner des parties de l'agrafe avec la surface de la bande, l'élément chauffant (3) étant alors retiré latéralement de la jonction entre la bande (7) et l'agrafe.

4. Procédé selon la revendication 3, **caractérisé en ce que** les éléments chauffants à fil métallique (3x) comprennent un conduit pour le passage de gaz réfrigérant (3z) déclenché après l'application du courant électrique.
